# EUROPEAN PATENT APPLICATION

(11) **EP 4 421 889 A1**
(43) Date of publication of application: **28.08.2024**
(21) Application number: 22918419.7
(22) Date of filing: 22.12.2022
(51) Int. Cl.: H01M 4/02, H01M 4/136, H01M 4/1397, H01M 10/05

(54) **POSITIVE ELECTRODE PLATE, SECONDARY BATTERY, BATTERY MODULE, BATTERY PACK, AND POWER CONSUMING DEVICE**

(30) Priority: 04.01.2022 CN 202210003693
(71) Applicant: Contemporary Amperex Technology Co., Limited, Ningde City, Fujian 352100 (CN)
(72) Inventor: LIN, Jianghui, Ningde City, Fujian 352100 (CN); ZHAO, Yanjie, Ningde City, Fujian 352100 (CN); LI, Xing, Ningde City, Fujian 352100 (CN); JIN, Haizu, Ningde City, Fujian 352100 (CN)
(74) Representative: Gong, Jinping
(86) International application number: PCT/CN2022/141109
(87) International publication number: WO 2023/130976

(57) **Abstract**

This application provides a positive electrode plate, a secondary battery, a battery module, a battery pack, and an electric apparatus. The positive electrode plate includes a current collector and an electrode membrane formed on at least one surface of the current collector. The electrode membrane includes a first positive electrode active substance layer and a second positive electrode active substance layer, and the first positive electrode active substance layer is located between the current collector and the second positive electrode active substance layer. A first positive electrode active substance material in the first positive electrode active substance layer contains hollow particles, and a second positive electrode active substance material in the second positive electrode active substance layer contains solid particles. This application can increase the compacted density of the positive electrode plate, so as to increase the energy density of a battery cell without affecting the long-term cycling performance of the battery cell.

## Description

This application claims priority to China Patent Application No. 202210003693.4, filed with the China National Intellectual Property Administration on January 4, 2022 and entitled "POSITIVE ELECTRODE PLATE, SECONDARY BATTERY, BATTERY MODULE, BATTERY PACK, AND ELECTRIC APPARATUS", which is incorporated herein by reference in its entirety.

### TECHNICAL FIELD

This application relates to the field of secondary battery technologies, and in particular, to a positive electrode plate, a secondary battery, a battery module, a battery pack, and an electric apparatus.

### BACKGROUND

In recent years, secondary batteries have been widely used in energy storage power supply systems such as hydroelectric, thermal, wind, and solar power plants, and many other fields including electric tools, electric bicycles, electric motorcycles, electric vehicles, military equipment, and aerospace.

Along with the great development of secondary batteries, higher requirements are imposed on their energy density, cycling performance, safety performance, and the like. In addition, the compacted density (hereinafter referred to as compacted density) of positive electrode plates is increased to a limited extent. Therefore, increase in the energy density of battery cells is also limited. Moreover, increasing the energy density of a battery cell may impair the long-term cycling performance of the battery cell.

Therefore, secondary batteries in the prior art still need to be improved in the compacted density of positive electrode plates and the energy density and long-term cycling performance of battery cells.

### SUMMARY

In view of the foregoing subject, this application is intended to provide a positive electrode plate, a secondary battery, a battery module, a battery pack, and an electric apparatus. This application can increase the compacted density of the positive electrode plate, so as to increase the energy density of a battery cell without affecting the long-term cycling performance of the battery cell.

To achieve the foregoing objective, a first aspect of this application provides a positive electrode plate, including a current collector and an electrode membrane formed on at least one surface of the current collector. The electrode membrane includes a first positive electrode active substance layer and a second positive electrode active substance layer, and the first positive electrode active substance layer is located between the current collector and the second positive electrode active substance layer. A first positive electrode active substance material in the first positive electrode active substance layer contains hollow particles, and a second positive electrode active substance material in the second positive electrode active substance layer contains solid particles.

In this application, the first positive electrode active substance material in the first positive electrode active substance layer contains hollow particles, and the second positive electrode active substance material in the second positive electrode active substance layer contains solid particles. In this way, the compacted density of the positive electrode plate can be increased, so as to increase the energy density of the battery cell without affecting the long-term cycling performance of the battery cell.

In any embodiment, in the first positive electrode active substance material in the first positive electrode active substance layer, a mass percentage of the hollow particles may be 70%-100%, and in the second positive electrode active substance material in the second positive electrode active substance layer, a mass percentage of the solid particles may be 50%-100%. In this application, the mass percentages of the hollow particles and solid particles fall within the foregoing ranges. This can increase the compacted density of the positive electrode plate, so as to increase the energy density of the battery cell without affecting the long-term cycling performance of the battery cell. Further, the production cost can be reduced.

In any embodiment, a volume of a hollow part in the hollow particle may be 10%-90%, optionally 10%-50%, of a volume of the hollow particle. Optionally, a ratio of a diameter of the hollow part in the hollow particle to a diameter of the hollow particle is 10%-90%. With such hollow particles selected, this application can further increase the compacted density of the positive electrode plate, so as to further increase the energy density of the battery cell without affecting the long-term cycling performance of the battery cell.

In any embodiment, the hollow particles and the solid particles may each include at least one of lithium iron phosphate, lithium nickel cobalt manganate, lithium manganate oxide, lithium cobalt oxide, lithium nickel oxide, lithium titanate, lithium nickel cobalt aluminate, and a lithium-rich manganese-based material. With the foregoing materials selected, this application can further increase the compacted density of the positive electrode plate, so as to further increase the energy density of the battery cell without affecting the long-term cycling performance of the battery cell.

In any embodiment, the hollow particles may be of a lithium-rich manganese-based material or lithium manganate oxide, and the solid particles may be of lithium iron phosphate or lithium nickel cobalt manganate. With the foregoing materials selected, this application can improve the synergistic effect between the first positive electrode active substance layer and the second positive electrode active substance layer in the positive electrode membrane. This further increases the compacted density of the positive electrode plate, so as to further increase the energy density of the battery cell and improve the long-term cycling performance of the battery cell.

In any embodiment, a median particle size of the hollow particles may be 0.1-20 µm, and a median particle size of the solid particles may be 0.2-2 µm.

In any embodiment, a ratio of a median particle size of the hollow particles to a median particle size of the solid particles may be 2-50. Optionally, the ratio of the median particle size of the hollow particles to the median particle size of the solid particles is 5-30.

With the hollow particles and solid particles of the foregoing median particle sizes selected, this application can further increase the compacted density of the positive electrode plate, so as to further increase the energy density of the battery cell without affecting the long-term cycling performance of the battery cell.

In any embodiment, a specific surface area of the hollow particles may be 0.5-1.5 m²/g, and a specific surface area of the solid particles may be 0.5-20 m²/g. In this application, the hollow particles and solid particles with the foregoing specific surface areas are selected. This can further increase the compacted density of the positive electrode plate, so as to further increase the energy density of the battery cell without affecting the long-term cycling performance of the battery cell.

In any embodiment, a coating weight, namely a surface density, of the first positive electrode active substance material in the first positive electrode active substance layer may be 2-30 mg/cm², and a coating weight, namely a surface density, of the second positive electrode active substance material in the second positive electrode active substance layer may be 2-30 mg/cm². Optionally, the surface density of the first positive electrode active substance material in the first positive electrode active substance layer is 2-20 mg/cm², and the surface density of the second positive electrode active substance material in the second positive electrode active substance layer is 2-20 mg/cm². With the foregoing surface densities selected, this application can further increase the compacted density of the positive electrode plate, so as to further increase the energy density of the battery cell.

In any embodiment, a ratio of a surface density of the second positive electrode active substance material in the second positive electrode active substance layer to a surface density of the first positive electrode active substance material in the first positive electrode active substance layer may be 0.1-10. With the surface density ratio set in the foregoing range, this application can further increase the compacted density of the positive electrode plate, so as to further increase the energy density of the battery cell without affecting the long-term cycling performance of the battery cell.

In any embodiment, a ratio of a surface density of the second positive electrode active substance material in the second positive electrode active substance layer to a surface density of the first positive electrode active substance material in the first positive electrode active substance layer may be 1-4. With the surface density ratio set in the foregoing range, this application can achieve a good balance between the energy density and long-term cycling performance of the battery cell.

In any embodiment, a thickness of the first positive electrode active substance layer is 0.04-0.5 mm. Optionally, a thickness of the second positive electrode active substance layer is 0.04-0.5 mm. With the foregoing thickness ranges selected, this application can achieve a good balance between the energy density and long-term cycling performance of the battery cell.

A second aspect of this application provides a secondary battery, including the positive electrode plate according to the first aspect. The secondary battery in this application can achieve a good balance between the energy density and long-term cycling performance of the battery cell.

A third aspect of this application provides a battery module, including the secondary battery according to the second aspect.

A fourth aspect of this application provides a battery pack, including the battery module according to the third aspect.

A fifth aspect of this application provides an electric apparatus, including at least one of the secondary battery according to the second aspect, the battery module according to the third aspect, and the battery pack according to the fourth aspect.

The battery module, battery pack, and electric apparatus in this application adopt the foregoing secondary battery, and therefore have all the beneficial effects of the secondary battery.

### BRIEF DESCRIPTION OF DRAWINGS

FIG. 1 is a schematic diagram of a positive electrode plate according to an embodiment of this application.
FIG. 2 is a SEM image of a cross section of hollow particles of a lithium-rich manganese-based material.
FIG. 3 is a schematic diagram of a secondary battery according to an embodiment of this application.
FIG. 4 is an exploded view of the secondary battery according to the embodiment of this application shown in FIG. 3.
FIG. 5 is a schematic diagram of a battery module according to an embodiment of this application.
FIG. 6 is a schematic diagram of a battery pack according to an embodiment of this application.
FIG. 7 is an exploded view of the battery pack according to the embodiment of this application shown in FIG. 6.
FIG. 8 is a schematic diagram of an electric apparatus using a secondary battery as a power source according to an embodiment of this application.

Reference signs:
1: battery pack; 2: upper box body; 3: lower box body; 4: battery module; 5: secondary battery; 51: housing; 52: electrode assembly; and 53: top cover assembly.

### DESCRIPTIONS OF EMBODIMENTS

The following specifically discloses embodiments of a positive electrode plate, a secondary battery, a battery module, a battery pack, and an electric apparatus in this application, with proper reference to accompanying drawings. However, unnecessary detailed descriptions may be omitted. For example, a detailed description of a well-known matter or a repeated description of an actually identical structure may be omitted. This is to avoid an unnecessarily lengthy description below, for ease of understanding by persons skilled in the art. In addition, the accompanying drawings and the following descriptions are provided for persons skilled in the art to fully understand this application, instead of limiting the subject matter recorded in the claims.

"Ranges" disclosed in this application are defined by means of setting lower and upper limits. A given range is defined by selecting one lower limit and one upper limit, where the selected lower and upper limits define boundaries of a particular range. Ranges defined in this manner may or may not include end values, and any combinations may be used, meaning that any lower limit may be combined with any upper limit to form a range. For example, if ranges 60-120 and 80-110 are listed for a particular parameter, it is also predictable to construe the ranges as 60-110 and 80-120. In addition, if 1 and 2 are listed as the minimum range values, and 3, 4, and 5 are listed as the maximum range values, the following ranges are all predictable: 1-3, 1-4, 1-5, 2-3, 2-4, and 2-5. In this application, unless otherwise stated, a value range of "a-b" is an abbreviated representation of any combination of real numbers between a and b, where both a and b are real numbers. For example, the numerical range "0-5" means that all real numbers between "0-5" are listed herein, and "0-5" is just an abbreviated representation of the combinations of these numerical values. In addition, when a parameter is expressed as an integer greater than or equal to 2, this is equivalent to that the parameter is, for example, an integer of 2, 3, 4, 5, 6, 7, 8, 9, 10, 11, 12, and the like.

Unless otherwise specified, all the embodiments and optional embodiments in this application may be combined to form a new technical solution.

Unless otherwise specified, all the technical features and optional technical features in this application may be combined to form a new technical solution.

Unless otherwise specified, all the steps in this application may be performed sequentially or randomly, or preferably performed sequentially. For example, the method includes steps (a) and (b), indicating that the method may include steps (a) and (b) performed sequentially, or steps (b) and (a) performed sequentially. For example, the method may further include step (c), indicating that step (c) may be added to the method in any ordinal position, for example, the method may include steps (a), (b), and (c), steps (a), (c), and (b), steps (c), (a), and (b), or the like.

Unless otherwise specified, "comprise" and "include" mentioned in this application may be exclusive or inclusive. For example, "comprise" and "include" may comprise or include other components not listed, or may comprise or include only the listed components.

Unless otherwise specified, in this application, the term "or" is inclusive. For example, a phrase "Aor B" means "A, B, or both A and B". More specifically, any of the following conditions satisfies the condition "A or B": A is true (or present) and B is false (or not present); A is false (or not present) and B is true (or present); or both A and B are true (or present).

This application provides a positive electrode plate, a secondary battery including the positive electrode plate, a battery module including the secondary battery, a battery pack including the battery module, and an electric apparatus including at least one of the secondary battery, the battery module, and the battery pack. The following describes in detail the positive electrode plate, secondary battery, battery module, battery pack, and electric apparatus of this application.

### Positive electrode plate

An embodiment of this application provides a positive electrode plate, including a current collector and an electrode membrane formed on at least one surface of the current collector. The electrode membrane includes a first positive electrode active substance layer and a second positive electrode active substance layer, and the first positive electrode active substance layer is located between the current collector and the second positive electrode active substance layer. A first positive electrode active substance material in the first positive electrode active substance layer contains hollow particles, and a second positive electrode active substance material in the second positive electrode active substance layer contains solid particles.

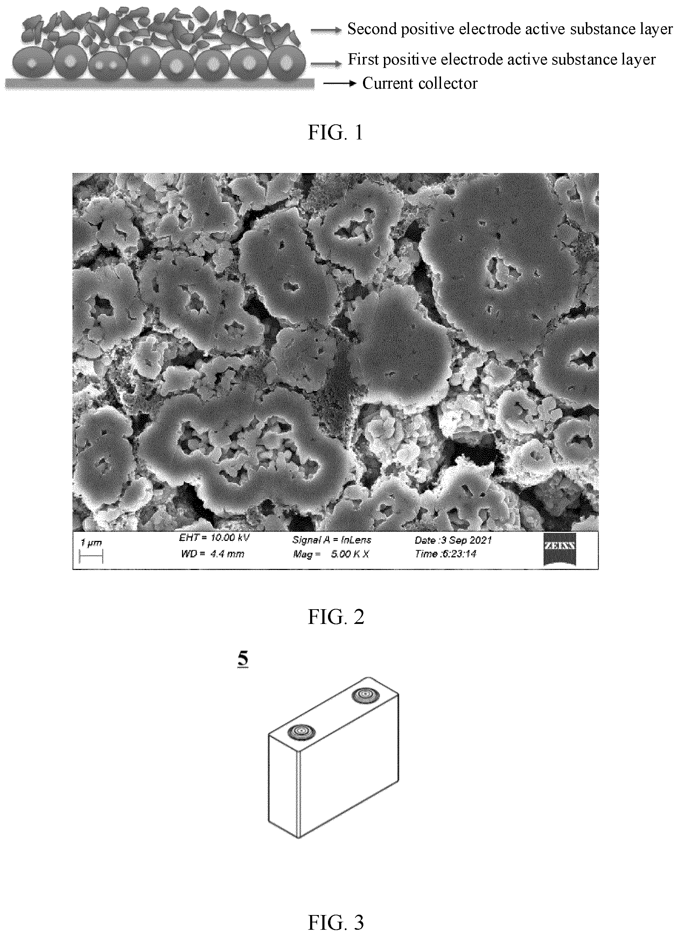

FIG. 1 is a schematic diagram of a positive electrode plate according to an embodiment of this application. As shown in FIG. 1, the first positive electrode active substance layer and the second positive electrode active substance layer are sequentially arranged on one surface of the current collector. The first positive electrode active substance material in the first positive electrode active substance layer contains hollow particles, and the second positive electrode active substance material in the second positive electrode active substance layer contains solid particles. In other words, the positive electrode plate according to this embodiment of this application adopts an electrode plate design, in which a solid material is used as the upper layer and a hollow material is used as the lower layer. The prior art discloses only a positive electrode active substance layer of a positive electrode plate made of either a solid material or a hollow material. With the prior-art design, the positive electrode plate has a low overall compacted density. In this case, the energy density of the battery cell cannot be greatly increased, and the long-term cycling performance of the battery cell cannot be ensured.

Although the mechanism is still unclear, the applicant has unexpectedly found that the positive electrode active substance layer of a positive electrode plate is divided into an upper layer and a lower layer, where the upper layer adopts a positive electrode active substance material including solid particles and the lower layer adopts a positive electrode active substance material including hollow particles, and the hollow particles in the lower layer can be deformed to some extent, so that the lower layer can be used as a buffer layer for the solid particles in the upper layer. This can increase the overall compacted density of the positive electrode plate, increase the energy density of a battery cell, and guarantee the long-term cycling performance of the battery cell.

In some embodiments, in the first positive electrode active substance material in the first positive electrode active substance layer, a mass percentage of the hollow particles may be between 70% and 100%. Generally, hollow particles are more expensive than solid particles. As long as the effects of this application can be achieved, the first positive electrode active substance material in the first positive electrode active substance layer may not be entirely composed of hollow particles, but may also include solid particles. The mass percentage of the hollow particles is optionally between 80% and 100%. Optionally, the mass percentage of the hollow particles is between 90% and 100%. In addition, to increase the energy density of the battery cell, the mass percentage of the solid particles in the second positive electrode active substance material in the second positive electrode active substance layer may be between 50% and 100%. Optionally, the mass percentage of the solid particles is between 60% and 100%. Optionally, the mass percentage of the solid particles is between 90% and 100%. Setting the mass percentages of the hollow particles and solid particles in the foregoing ranges helps achieve a good balance between the energy density and long-term cycling performance of the battery cell, and can reduce the production cost.

In some embodiments, as long as the hollow particles are hollow, they may include at least one of lithium iron phosphate, lithium nickel cobalt manganate, lithium manganate oxide, lithium cobalt oxide, lithium nickel oxide, lithium titanate, lithium nickel cobalt aluminate, and a lithium-rich manganese-based material. Optionally, the hollow particles are of a lithium-rich manganese-based material or lithium manganate oxide. Optionally, the hollow particles are of a lithium-rich manganese-based material. A shape of the hollow particles is not particularly limited, and may be a hollow sphere, a hollow tube, or the like. FIG. 2 is a SEM image of a cross section of hollow particles of a lithium-rich manganese-based material. As long as the solid particles are solid, they may include at least one of lithium iron phosphate, lithium nickel cobalt manganate, lithium manganate oxide, lithium cobalt oxide, lithium nickel oxide, lithium titanate, lithium nickel cobalt aluminate, and a lithium-rich manganese-based material. Optionally, the solid particles are of lithium iron phosphate or lithium nickel cobalt manganate. The lithium-rich manganese-based material can be represented by a general formula xLiMO₂(1-x)Li₂MnO₃ (where x is 0-1 and M is at least one of Co, Fe, Ni, and Mn).

With the foregoing materials selected, this application can further increase the compacted density of the positive electrode plate, so as to further increase the energy density of the battery cell without affecting the long-term cycling performance of the battery cell.

In some embodiments, a ratio of a diameter of a hollow part (pores) in the hollow particle to a diameter of the hollow particle may be 10%-90%, optionally 10%-80%, and optionally 10%-50%. A volume of the hollow part in the hollow particle may be 10%-90%, optionally 10%-80%, and optionally 10%-50%, of a volume of the hollow particle. A larger hollow part in the hollow particle can increase the deformation of a material and helps provide a higher compacted density. However, with the increase in the volume of the hollow part, the material becomes unstable, the cycling performance of the battery cell deteriorates, and the capacity retention rate decreases. The ratio of the diameter of the hollow part in the hollow particle to the diameter of the hollow particle and/or the volume ratio of the hollow part in the hollow particle to the hollow particle are set in the foregoing ranges. This can further increase the compacted density of the positive electrode plate, so as to further increase the energy density of the battery cell and improve the long-term cycling performance of the battery cell.

In some embodiments, a median particle size of the hollow particles may be 0.1 µm-20 µm, optionally 2 µm-15 µm, and optionally 5 µm-9 µm. A median particle size of the solid particles may be 0.2 µm-2 µm, optionally 0.3 µm-1 µm. A ratio of the median particle size of the hollow particles to the median particle size of the solid particles is 2-50, optionally 5-30. When the particle size of hollow particles forming the lower layer of the electrode membrane is larger than that of solid particles forming the upper layer of the electrode membrane, it helps increase the compacted density of the electrode plate and energy density. However, large particles will cause problems of unstable materials and poor cycling performance. The median particle size of the hollow particles, the median particle size of the solid particles, and/or the ratio of the median particle size of the hollow particles to the median particle size of the solid particles are set in the foregoing ranges. This can further increase the overall compacted density of the positive electrode plate, so as to further increase the energy density of the battery cell and improve the long-term cycling performance of the battery cell.

In some embodiments, a specific surface area of the hollow particles may be 0.5-1.5 m²/g, optionally 0.8-1.5 m²/g. A specific surface area of the solid particles may be 0.5-20 m²/g, optionally 1-10 m²/g. In this application, the hollow particles and solid particles with the foregoing specific surface areas are selected. This can further increase the compacted density of the positive electrode plate, so as to further increase the energy density of the battery cell without affecting the long-term cycling performance of the battery cell.

The hollow particles and solid particles may be commercially available products.

A coating weight of the first positive electrode active substance material in the first positive electrode active substance layer may be 2-30 mg/cm², optionally 2-20 mg/cm², and optionally 4-10 mg/cm². The coating weight herein is also referred to as the surface density. A coating weight of the second positive electrode active substance material in the second positive electrode active substance layer may be 2-30 mg/cm², optionally 2-20 mg/cm², and optionally 10-16 mg/cm².

In addition, a ratio of the surface density of the second positive electrode active substance material in the second positive electrode active substance layer to the surface density of the first positive electrode active substance material in the first positive electrode active substance layer may be 0.1-10, optionally 0.5-6, and optionally 1-4.

Adjusting the surface densities of the positive electrode active substance materials in the first positive electrode active substance layer and the second positive electrode active substance layer can further increase the compacted density. When the surface density of the first positive electrode active substance material in the first positive electrode active substance layer is increased, improvement of the compacted density is enhanced. However, the first positive electrode active substance material in the first positive electrode active substance layer is a hollow structure, and may break after long-term cycling. In this case, reaction between the new interface and the electrolyte will damage the material, causing capacity loss. Therefore, the surface density of the first positive electrode active substance material in the first positive electrode active substance layer should not be excessively high. In addition, the hollow active substance material in the first positive electrode active substance layer serves as a buffer for the solid active substance material in the second positive electrode active substance layer. With the surface density ratio of the active substance materials in the first positive electrode active substance layer and the second positive electrode active substance layer controlled within a range, the overall compacted density of the positive electrode plate can be increased, so as to increase the energy density of the battery cell without affecting the long-term cycle life of the battery cell. In other words, with the surface density ratio set in the foregoing range, this application can achieve a good balance between the energy density and long-term cycling performance of the battery cell.

The first positive electrode active substance layer and the second positive electrode active substance layer further optionally include a binder. For example, the binder may include at least one of polyvinylidene fluoride (PVDF), polytetrafluoroethylene (PTFE), vinylidene fluoridetetrafluoroethylene-propylene terpolymer, vinylidene fluoride-hexafluoropropylenetetrafluoroethylene terpolymer, tetrafluoroethylene-hexafluoropropylene copolymer, and fluorinecontaining acrylic resin.

The first positive electrode active substance layer and the second positive electrode active substance layer further optionally include a conductive agent. For example, the conductive agent may include at least one of superconducting carbon, acetylene black, carbon black, Ketjen black, carbon dots, carbon nanotubes, graphene, and carbon nanofiber.

A thickness of the first positive electrode active substance layer may be 0.04-0.5 mm, optionally 0.05-0.3 mm. A thickness of the second positive electrode active substance layer may be 0.04-0.5 mm, optionally 0.05-0.3 mm. The total thickness of the first positive electrode active substance layer and the second positive electrode active substance layer may be 0.08 mm-1.0 mm, optionally 0.1 mm-0.6 mm.

The current collector may be a metal foil current collector or a composite current collector. For example, an aluminum foil may be used as the metal foil. The composite current collector may include a polymer material matrix layer and a metal layer formed on at least one surface of the polymer material matrix layer. The composite current collector may be formed by forming a metal material (aluminum, aluminum alloy, nickel, nickel alloy, titanium, titanium alloy, silver and silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode plate may be prepared using the following method: the foregoing constituents for preparing the first positive electrode active substance layer, for example, the positive electrode active substance material including hollow particles, the conductive agent, the binder, and any other constituent, are dispersed in a solvent (for example, N-methylpyrrolidone) to form a first positive electrode active substance layer slurry; the foregoing constituents for preparing the second positive electrode active substance layer, for example, the positive electrode active substance material including solid particles, the conductive agent, the binder, and any other constituent, are dispersed in a solvent (for example, N-methylpyrrolidone) to form a second positive electrode active substance layer slurry; and the prepared first positive electrode active substance layer slurry is applied onto the positive electrode current collector and dried, and the prepared second positive electrode active substance layer slurry is applied onto the first positive electrode active substance layer slurry, followed by processes such as drying and cold pressing to obtain the positive electrode plate.

### Secondary battery

A second aspect of this application provides a secondary battery, including the foregoing positive electrode plate. The secondary battery in this application can achieve a good balance between the energy density and long-term cycling performance of the battery cell.

The secondary battery in this application may be a lithium-ion secondary battery or the like. Generally, a lithium-ion secondary battery includes a positive electrode plate, a negative electrode plate, an electrolyte, and a separator. During charging and discharging of a battery, active ions are intercalated and deintercalated between the positive electrode plate and the negative electrode plate. The electrolyte is used for conducting ions between the positive electrode plate and the negative electrode plate. The separator is provided between the positive electrode plate and the negative electrode plate, preventing a short circuit between the positive and negative electrodes and allowing ions to pass through.

### [Positive electrode plate]

The positive electrode plate described in the foregoing "Positive electrode plate" section is used as the positive electrode plate.

### [Negative electrode plate]

The negative electrode plate includes a negative electrode current collector and a negative electrode film layer provided on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

The negative electrode current collector may be a metal foil current collector or a composite current collector. For example, a copper foil may be used as the metal foil. The composite current collector may include a polymer material matrix layer and a metal layer formed on at least one surface of the polymer material matrix layer. The composite current collector may be formed by forming a metal material (copper, copper alloy, nickel, nickel alloy, titanium, titanium alloy, silver and silver alloy, or the like) on a polymer material matrix (for example, matrices of polypropylene (PP), polyethylene terephthalate (PET), polybutylene terephthalate (PBT), polystyrene (PS), and polyethylene (PE)).

The negative electrode active material may be a negative electrode active material for batteries known in the art. For example, the negative electrode active material may include at least one of the following materials: artificial graphite, natural graphite, soft carbon, hard carbon, a silicon-based material, a tin-based material, lithium titanate, and the like. The silicon-based material may include at least one of elemental silicon, a silicon-oxygen compound, a siliconcarbon composite, a silicon-nitrogen composite, and silicon alloy. The tin-based material may include at least one of elemental tin, a tin-oxygen compound, and tin alloy. However, this application is not limited to these materials, but may use other conventional materials that can be used as negative electrode active materials for batteries instead. One of these negative electrode active materials may be used alone, or two or more of them may be used in combination.

The negative electrode film layer further optionally includes a binder. The binder may include at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

The negative electrode film layer further optionally includes a conductive agent. The conductive agent may include at least one of superconducting carbon, acetylene black, carbon black, Ketjen black, carbon dots, carbon nanotubes, graphene, and carbon nanofiber.

The negative electrode film layer further optionally includes other promoters such as a thickener (for example, sodium carboxymethyl cellulose (CMC-Na)).

In some embodiments, the negative electrode plate may be prepared in the following manner: the foregoing constituents for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

### [Electrolyte]

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is a liquid electrolyte. The electrolyte includes an electrolytic salt and a solvent.

In some embodiments, the electrolytic salt may include at least one of lithium hexafluorophosphate, lithium tetrafluoroborate, lithium perchlorate, lithium hexafluoroarsenate, lithium bis(trifluorosulfonyl)imide, lithium bistrifluoromethanesulfonimide, lithium trifluoromethanesulfonate, lithium difluorophosphate, lithium difluoro(oxalato)borate, lithium dioxalate borate, lithium difluoro(dioxalato)phosphate, and lithium tetrafluoro oxalato phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the electrolyte further optionally includes an additive. For example, the additive may include a negative electrode film-forming additive and a positive electrode film-forming additive, and may further include an additive capable of improving some performance of the battery, for example, an additive for improving overcharge performance of the battery and an additive for improving high-temperature performance or low-temperature performance of the battery.

### [Separator]

In some embodiments, the secondary battery further includes a separator. This application does not impose particular limitations on the type of the separator, and any known porous-structure separator with good chemical stability and mechanical stability can be selected.

In some implementations, a material of the separator may include at least one of glass fiber, non-woven fabric, polyethylene, polypropylene, and polyvinylidene fluoride. The separator may be a single-layer film or a multi-layer composite film, which is not specifically limited. When the separator is a multi-layer composite film, each layer may be made of the same or different materials, which is not specifically limited.

In some embodiments, the positive electrode plate, the negative electrode plate, and the separator may be wound or laminated to form an electrode assembly.

In some embodiments, the secondary battery may include an outer package. The outer package may be used for packaging the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft bag, for example, a soft pouch. A material of the soft bag may be plastic, which, for example, may be polypropylene, polybutylene terephthalate, and polybutylene succinate.

This application does not impose any special limitations on a shape of the secondary battery, and the secondary battery may be cylindrical, rectangular, or of any other shapes. For example, FIG. 3 shows a secondary battery 5 of a rectangular structure as an example.

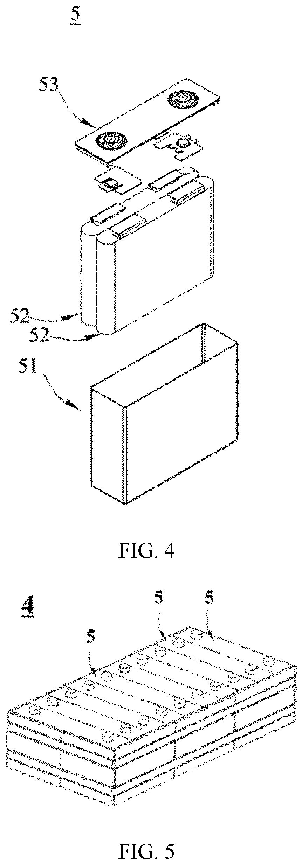

In some embodiments, referring to FIG. 4, the outer package may include a housing 51 and a cover plate 53. The housing 51 may include a bottom plate and side plates connected to the bottom plate, and the bottom plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be wound or laminated to form an electrode assembly 52. The electrode assembly 52 is packaged in the accommodating cavity. The electrolyte infiltrates the electrode assembly 52. The secondary battery 5 may include one or more electrode assemblies 52, which may be determined by persons skilled in the art based on actual needs.

In some embodiments, secondary batteries may be assembled into the battery module provided in the third aspect of this application, and the battery module may include one or more secondary batteries. A specific quantity may be determined by persons skilled in the art based on the application and capacity of the battery module.

FIG. 5 shows a battery module 4 as an example. Referring to FIG. 5, in the battery module 4, a plurality of secondary batteries 5 may be sequentially arranged in a length direction of the battery module 4. Certainly, the batteries may alternatively be arranged in any other manners. Further, the plurality of secondary batteries 5 may be fastened through fasteners.

Optionally, the battery module 4 may further include a housing with accommodating space, and the plurality of secondary batteries 5 are accommodated in the accommodating space.

In some embodiments, the battery modules may be assembled into the battery pack provided in the fourth aspect of this application, and the battery pack may include one or more battery modules. A specific quantity may be determined by persons skilled in the art based on the application and capacity of the battery pack.

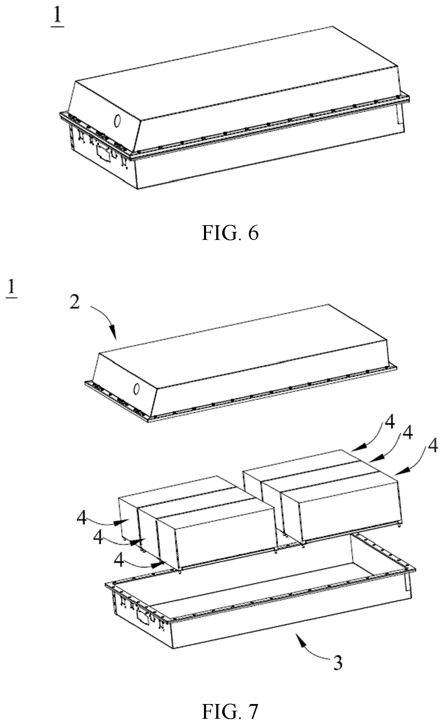

FIG. 6 and FIG. 7 show a battery pack 1 as an example. Referring to FIG. 6 and FIG. 7, the battery pack 1 may include a battery box and a plurality of battery modules 4 disposed in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

### Electric apparatus

The fifth aspect of this application provides an electric apparatus, including at least one of the secondary battery, the battery module, and the battery pack. The electric apparatus in this application adopts the foregoing secondary battery, and therefore has all the beneficial effects of the secondary battery.

The secondary battery may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like, but is not limited thereto.

A secondary battery, a battery module, or a battery pack may be selected for the electric apparatus based on application needs.

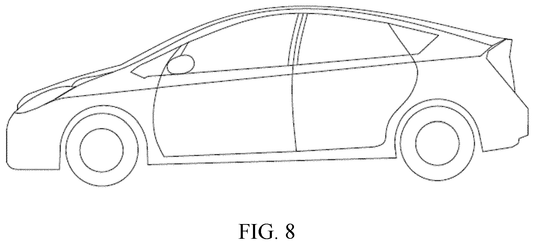

FIG. 8 shows an example electric apparatus. This electric apparatus is a battery electric vehicle, a hybrid electric vehicle, a plug-in hybrid electric vehicle, or the like. To meet requirements of the electric apparatus for a battery with high power and high energy density, a battery pack or a battery module may be used.

In another example, the apparatus may be a mobile phone, a tablet computer, a notebook computer, or the like. The apparatus is usually required to be light and thin, and a secondary battery may be used as a power source.

### Examples

The following describes examples of this application. The examples described below are illustrative and only used for explaining this application, and cannot be construed as limitations on this application. Examples in which technical solutions or conditions are not specified are made in accordance with technical solutions or conditions described in literature in the field or made in accordance with product instructions. The reagents or instruments used are all conventional products that are commercially available if no manufacturer is indicated. In addition, unless otherwise specified, "%" represents a weight percentage or mass percentage.

### Example 1

### [Preparation of negative electrode plate]

An active substance artificial graphite, a conductive agent carbon black, and a binder styrene-butadiene rubber were dissolved at a weight ratio of 96:2:2 in a solvent deionized water and evenly mixed to produce a negative electrode slurry. The negative electrode slurry was uniformly applied onto a negative electrode current collector copper foil once or for several times, followed by drying, cold pressing, and cutting to obtain a negative electrode plate.

### [Preparation of positive electrode plate]

A hollow lithium-rich manganese-based material (manufactured by Ningxia Hanyao Graphene Energy Storage Material Technology Co., Ltd., median particle size: 6 µm, hollow part volume/hollow particle volume: 32%, specific surface area: 0.88 m²/g) (first positive electrode active substance material), a conductive agent carbon black, and a binder polyvinylidene fluoride (PVDF) were evenly mixed at a weight ratio of 96:2.5:1.5. A solvent N-methylpyrrolidone (NMP) was added to adjust the solid content to 70%-80% and stirred to obtain a positive electrode slurry as the first positive electrode active substance layer (lower layer). Solid lithium iron phosphate (LiFePO₄) (manufactured by Ningxia Hanyao Graphene Energy Storage Material Technology Co., Ltd., median particle size: 1 µm, specific surface area: 10 m²/g) (second positive electrode active substance material), a conductive agent carbon black, and a binder polyvinylidene fluoride (PVDF) were evenly mixed at a weight ratio of 96:2.5:1.5. A solvent N-methylpyrrolidone (NMP) was added to adjust the solid content to 70%-80% and stirred to obtain a positive electrode slurry as the second positive electrode active substance layer (upper layer). Then, the positive electrode slurry as the first positive electrode active substance layer was uniformly applied onto a positive electrode current collector aluminum foil, so that the surface density (CW) of the first positive electrode active substance material was 10 mg/cm². After drying, the positive electrode slurry as the second positive electrode active substance layer was applied onto the positive electrode slurry as the first positive electrode active substance layer, so that the surface density (CW) of the second positive electrode active substance material was 10 mg/cm². The positive electrode plate was obtained after cold pressing and cutting.

### [Preparation of electrolyte]

In an argon atmosphere glove box, ethylene carbonate (EC) and ethyl methyl carbonate (EMC) were evenly mixed at a volume ratio of 3:7 to prepare a mixed liquid of organic solvents, and lithium hexafluorophosphate (LiPF₆) accounting for 12.5% of total mass of the electrolyte was added to the mixed liquid of organic solvents as an electrolytic salt and dissolved by stirring to obtain the electrolyte.

### [Separator]

A polypropylene film was used as the separator.

### [Preparation of secondary battery]

The positive electrode plate, the separator, and the negative electrode plate were stacked in sequence, so that the separator was located between the positive electrode plate and the negative electrode plate for separation, and then the resulting stack was wound to obtain a bare cell. Tabs were welded to the bare cell, the bare cell was placed in an aluminum shell and baked at 80°C to remove moisture, the electrolyte was injected, and then sealing was performed to obtain an uncharged battery. Processes such as standing, hot and cold pressing, formation, shaping, and capacity testing were sequentially performed on the uncharged battery to obtain the secondary battery product of Example 1.

### Example 2

### [Preparation of positive electrode plate]

Hollow lithium manganate oxide (manufactured by Ningxia Hanyao Graphene Energy Storage Material Technology Co., Ltd., median particle size: 6 µm, hollow part volume/hollow particle volume: 32%, specific surface area: 0.88 m²/g) (first positive electrode active substance material), a conductive agent carbon black, and a binder polyvinylidene fluoride (PVDF) were evenly mixed at a weight ratio of 96:2.5:1.5. A solvent N-methylpyrrolidone (NMP) was added to adjust the solid content to 70%-80% and stirred to obtain a positive electrode slurry as the first positive electrode active substance layer (lower layer). Solid lithium iron phosphate (LiFePO₄) (second positive electrode active substance material)(manufactured by Ningxia Hanyao Graphene Energy Storage Material Technology Co., Ltd., median particle size: 1 µm, specific surface area: 10 m²/g), a conductive agent carbon black, and a binder polyvinylidene fluoride (PVDF) were evenly mixed at a weight ratio of 96:2.5:1.5. A solvent N-methylpyrrolidone (NMP) was added to adjust the solid content to 70%-80% and stirred to obtain a positive electrode slurry as the second positive electrode active substance layer (upper layer). Then, the positive electrode slurry as the first positive electrode active substance layer was uniformly applied onto a positive electrode current collector aluminum foil, so that the surface density (CW) of the first positive electrode active substance material was 10 mg/cm². After drying, the positive electrode slurry as the second positive electrode active substance layer was applied onto the positive electrode slurry as the first positive electrode active substance layer, so that the surface density (CW) of the second positive electrode active substance material was 10 mg/cm². The positive electrode plate was obtained after cold pressing and cutting.

Except for the above, other operations were the same as those described in Example 1. Then, the secondary battery product of Example 2 was obtained.

### Example 3

### [Preparation of positive electrode plate]

During preparation of a positive electrode plate, solid lithium nickel cobalt manganate (manufactured by Ningxia Hanyao Graphene Energy Storage Material Technology Co., Ltd., median particle size: 1 µm, specific surface area: 10 m²/g) was used as the second positive electrode active substance material in the second positive electrode active substance layer. Except for the above, other operations were the same as those described in Example 1. Then, the secondary battery product of Example 3 was obtained.

### Example 4

During preparation of a positive electrode plate, the surface density (CW) of the first positive electrode active substance material was changed to 20 mg/cm², and the surface density (CW) of the second positive electrode active substance material was changed to 2 mg/cm². Except for the above, other operations were the same as those described in Example 1. Then, the secondary battery product of Example 4 was obtained.

### Example 5

During preparation of a positive electrode plate, the surface density (CW) of the first positive electrode active substance material was changed to 14 mg/cm², and the surface density (CW) of the second positive electrode active substance material was changed to 7 mg/cm². Except for the above, other operations were the same as those described in Example 1. Then, the secondary battery product of Example 5 was obtained.

### Example 6

During preparation of a positive electrode plate, the surface density (CW) of the first positive electrode active substance material was changed to 7 mg/cm², and the surface density (CW) of the second positive electrode active substance material was changed to 14 mg/cm². Except for the above, other operations were the same as those described in Example 1. Then, the secondary battery product of Example 6 was obtained.

### Example 7

During preparation of a positive electrode plate, the surface density (CW) of the first positive electrode active substance material was changed to 4 mg/cm², and the surface density (CW) of the second positive electrode active substance material was changed to 16 mg/cm². Except for the above, other operations were the same as those described in Example 1. Then, the secondary battery product of Example 7 was obtained.

### Example 8

During preparation of a positive electrode plate, the surface density (CW) of the first positive electrode active substance material was changed to 3 mg/cm², and the surface density (CW) of the second positive electrode active substance material was changed to 18 mg/cm². Except for the above, other operations were the same as those described in Example 1. Then, the secondary battery product of Example 8 was obtained.

### Example 9

During preparation of a positive electrode plate, the surface density (CW) of the first positive electrode active substance material was changed to 2 mg/cm², and the surface density (CW) of the second positive electrode active substance material was changed to 20 mg/cm². Except for the above, other operations were the same as those described in Example 1. Then, the secondary battery product of Example 9 was obtained.

### Example 10

During preparation of a positive electrode plate, the first positive electrode active substance material in the first positive electrode active substance layer was made to contain a hollow lithium-rich manganese-based material (manufactured by Ningxia Hanyao Graphene Energy Storage Material Technology Co., Ltd., median particle size: 6 µm, hollow part volume/hollow particle volume: 32%, specific surface area: 0.88 m²/g) and a solid lithium-rich manganese-based material (manufactured by Ningxia Hanyao Graphene Energy Storage Material Technology Co., Ltd., median particle size: 1 µm, specific surface area: 10 m²/g), which were present at a mass ratio of 70:30. Except for the above, other operations were the same as those described in Example 1. Then, the secondary battery product of Example 10 was obtained.

### Example 11

During preparation of a positive electrode plate, the first positive electrode active substance material in the first positive electrode active substance layer was made to contain a hollow lithium-rich manganese-based material (manufactured by Ningxia Hanyao Graphene Energy Storage Material Technology Co., Ltd., median particle size: 6 µm, hollow part volume/hollow particle volume: 32%, specific surface area: 0.88 m²/g) and a solid lithium-rich manganese-based material (manufactured by Ningxia Hanyao Graphene Energy Storage Material Technology Co., Ltd., median particle size: 1 µm, specific surface area: 10 m²/g), which were present at a mass ratio of 80:20. Except for the above, other operations were the same as those described in Example 1. Then, the secondary battery product of Example 11 was obtained.

### Example 12

During preparation of a positive electrode plate, the second positive electrode active substance material in the second positive electrode active substance layer was made to contain solid lithium iron phosphate (manufactured by Ningxia Hanyao Graphene Energy Storage Material Technology Co., Ltd., median particle size: 1 µm, specific surface area: 10 m²/g) and hollow lithium iron phosphate (manufactured by Ningxia Hanyao Graphene Energy Storage Material Technology Co., Ltd., median particle size: 6 µm, hollow part volume/hollow particle volume: 32%, specific surface area: 0.88 m²/g), which were present at a mass ratio of 50:50. Except for the above, other operations were the same as those described in Example 1. Then, the secondary battery product of Example 12 was obtained.

### Example 13

During preparation of a positive electrode plate, the second positive electrode active substance material in the second positive electrode active substance layer was made to contain solid lithium iron phosphate (manufactured by Ningxia Hanyao Graphene Energy Storage Material Technology Co., Ltd., median particle size: 1 µm, specific surface area: 10 m²/g) and hollow lithium iron phosphate (manufactured by Ningxia Hanyao Graphene Energy Storage Material Technology Co., Ltd., median particle size: 6 µm, hollow part volume/hollow particle volume: 32%, specific surface area: 0.88 m²/g), which were present at a mass ratio of 60:40. Except for the above, other operations were the same as those described in Example 1. Then, the secondary battery product of Example 13 was obtained.

### Example 14

During preparation of a positive electrode plate, the second positive electrode active substance material in the second positive electrode active substance layer was made to contain solid lithium iron phosphate (manufactured by Ningxia Hanyao Graphene Energy Storage Material Technology Co., Ltd., median particle size: 1 µm, specific surface area: 10 m²/g) and hollow lithium iron phosphate (manufactured by Ningxia Hanyao Graphene Energy Storage Material Technology Co., Ltd., median particle size: 6 µm, hollow part volume/hollow particle volume: 32%, specific surface area: 0.88 m²/g), which were present at a mass ratio of 90:10. Except for the above, other operations were the same as those described in Example 1. Then, the secondary battery product of Example 14 was obtained.

### Comparative Example 1

### [Preparation of positive electrode plate]

Solid lithium iron phosphate (manufactured by Ningxia Hanyao Graphene Energy Storage Material Technology Co., Ltd., median particle size: 1 µm, specific surface area: 10 m²/g), a conductive agent carbon black, and a binder polyvinylidene fluoride (PVDF) were evenly mixed at a weight ratio of 96:2.5:1.5. A solvent N-methylpyrrolidone (NMP) was added to adjust the solid content to 70%-80% and stirred to obtain a positive electrode slurry. Then, the positive electrode slurry was uniformly applied onto a positive electrode current collector aluminum foil, so that the surface density (CW) of the solid lithium iron phosphate was 20 mg/cm². The positive electrode plate was obtained after drying, cold pressing, and cutting.

Except for the above, other operations were the same as those described in Example 1. Then, the secondary battery product of Comparative Example 1 was obtained.

### Comparative Example 2

### [Preparation of positive electrode plate]

A hollow lithium-rich manganese-based material (manufactured by Ningxia Hanyao Graphene Energy Storage Material Technology Co., Ltd., median particle size: 6 µm, hollow part volume/hollow particle volume: 32%, specific surface area: 0.88 m²/g), a conductive agent carbon black, and a binder polyvinylidene fluoride (PVDF) were evenly mixed at a weight ratio of 96:2.5:1.5. A solvent N-methylpyrrolidone (NMP) was added to adjust the solid content to 70%-80% and stirred to obtain a positive electrode slurry. Then, the positive electrode slurry was uniformly applied onto a positive electrode current collector aluminum foil, so that the surface density (CW) of the hollow lithium-rich manganese-based material was 20 mg/cm². The positive electrode plate was obtained after drying, cold pressing, and cutting.

Except for the above, other operations were the same as those described in Example 1. Then, the secondary battery product of Comparative Example 2 was obtained.

### Comparative Example 3

### [Preparation of positive electrode plate]

Solid lithium iron phosphate (LiFePO4) (manufactured by Ningxia Hanyao Graphene Energy Storage Material Technology Co., Ltd., median particle size: 1 µm, specific surface area: 10 m²/g) (first positive electrode active substance material), a conductive agent carbon black, and a binder polyvinylidene fluoride (PVDF) were evenly mixed at a weight ratio of 96:2.5:1.5. A solvent N-methylpyrrolidone (NMP) was added to adjust the solid content to 70%-80% and stirred to obtain a positive electrode slurry as the first positive electrode active substance layer (lower layer). A hollow lithium-rich manganese-based material (manufactured by Ningxia Hanyao Graphene Energy Storage Material Technology Co., Ltd., median particle size: 6 µm, hollow part volume/hollow particle volume: 32%, specific surface area: 0.88 m²/g) (second positive electrode active substance material), a conductive agent carbon black, and a binder polyvinylidene fluoride (PVDF) were evenly mixed at a weight ratio of 96:2.5:1.5. A solvent N-methylpyrrolidone (NMP) was added to adjust the solid content to 70%-80% and stirred to obtain a positive electrode slurry as the second positive electrode active substance layer (upper layer). Then, the positive electrode slurry as the first positive electrode active substance layer was uniformly applied onto a positive electrode current collector aluminum foil, so that the surface density (CW) of the first positive electrode active substance material was 10 mg/cm². After drying, the positive electrode slurry as the second positive electrode active substance layer was applied onto the positive electrode slurry as the first positive electrode active substance layer, so that the surface density (CW) of the second positive electrode active substance material was 10 mg/cm². The positive electrode plate was obtained after cold pressing and cutting.

Except for the above, other operations were the same as those described in Example 1. Then, the secondary battery product of Comparative Example 3 was obtained.

Table 1 lists relevant parameters used in Examples 1 to 14 and Comparative Examples 1 to 3.

**Table 1**

| Example/Compar ative Example | Positive electrode active substance material in positive electrode membrane | | Surface density (CW) (mg/cm²) | | | Compac ted density (g/cm³) | Energy density of battery cell (Wh/kg ) | Capacit y retentio n rate |
|---|---|---|---|---|---|---|---|---|
| | Second positive electrode active substance layer (upper layer) | First positive electrode active substance layer (lower layer) | Uppe r layer | Low er layer | CW ratio | | | |
| Example 1 | Solid lithium iron phosphate | Hollow lithium-rich manganese-based material | 10 | 10 | 1 | 2.70 | 205.0 | 91.5% |
| Example 2 | Solid lithium iron phosphate | Hollow lithium manganate oxide | 10 | 10 | 1 | 2.68 | 201.0 | 90.6% |
| Example 3 | Solid lithium nickel cobalt manganate | Hollow lithium-rich manganese-based material | 10 | 10 | 1 | 3.30 | 227.2 | 90.7% |
| Example 4 | Solid lithium iron phosphate | Hollow lithium-rich manganese-based material | 2 | 20 | 0.1 | 2.90 | 217.5 | 86.5% |
| Example 5 | Solid lithium iron phosphate | Hollow lithium-rich manganese-based material | 7 | 14 | 0.5 | 2.82 | 211.5 | 88.5% |
| Example 6 | Solid lithium iron phosphate | Hollow lithium-rich manganese-based material | 14 | 7 | 2 | 2.65 | 198.8 | 91.2% |
| Example 7 | Solid lithium iron phosphate | Hollow lithium-rich manganese-based material | 16 | 4 | 4 | 2.61 | 195.8 | 91.0% |
| Example 8 | Solid lithium iron phosphate | Hollow lithium-rich manganese-based material | 18 | 3 | 6 | 2.53 | 189.8 | 90.8% |
| Example 9 | Solid lithium iron phosphate | Hollow lithium-rich manganese-based material | 20 | 2 | 10 | 2.43 | 182.3 | 90.6% |
| Example 10 | Solid lithium iron phosphate | Hollow lithium-rich manganese-based material: solid lithium-rich manganese-based material=70:30 (mass ratio) | 10 | 10 | 1 | 2.64 | 198.5 | 91.3% |
| Example 11 | Solid lithium iron phosphate | Hollow lithium-rich manganese-based material: solid lithium-rich manganese-based material=80:20 (mass ratio) | 10 | 10 | 1 | 2.69 | 204.6 | 90.8% |
| Example 12 | Solid lithium iron phosphate: hollow lithium iron phosphate=50:50 (mass ratio) | Hollow lithium-rich manganese-based material | 10 | 10 | 1 | 2.79 | 208.7 | 90.8% |
| Example 13 | Solid lithium iron phosphate: hollow lithium iron phosphate=60:40 (mass ratio) | Hollow lithium-rich manganese-based material | 10 | 10 | 1 | 2.78 | 208.5 | 90.9% |
| Example 14 | Solid lithium iron phosphate: hollow lithium iron phosphate=90:10 (mass ratio) | Hollow lithium-rich manganese-based material | 10 | 10 | 1 | 2.74 | 206.4 | 91.3% |
| Comparative Example 1 | Solid lithium iron phosphate | | 20 | | / | 2.40 | 180.0 | 90.5% |
| Comparative Example 2 | Hollow lithium-rich manganese-based material | | 20 | | / | 3.00 | 220.0 | 84.5% |
| Comparative Example 3 | Hollow lithium-rich manganese-based material | Solid lithium iron phosphate | 10 | 10 | 1 | 2.50 | 188.5 | 86.2% |

### Example 15

During preparation of a positive electrode plate, a hollow lithium-rich manganese-based material, in which the volume ratio of the hollow part to the hollow particle was 12%, was used as the first positive electrode active substance material. Except for the above, other operations were the same as those described in Example 1. Then, the secondary battery product of Example 15 was obtained.

### Example 16

During preparation of a positive electrode plate, a hollow lithium-rich manganese-based material, in which the volume ratio of the hollow part to the hollow particle was 50%, was used as the first positive electrode active substance material. Except for the above, other operations were the same as those described in Example 1. Then, the secondary battery product of Example 16 was obtained.

### Example 17

During preparation of a positive electrode plate, a hollow lithium-rich manganese-based material, in which the volume ratio of the hollow part to the hollow particle was 87%, was used as the first positive electrode active substance material. Except for the above, other operations were the same as those described in Example 1. Then, the secondary battery product of Example 17 was obtained.

Table 2 lists relevant parameters used in Examples 1 and 15 to 17.

**Table 2**

| Example | Hollow part volume/hollow particle volume | Compacted density (g/cm³) | Energy density of battery cell (Wh/kg) | Capacity retention rate |
|---|---|---|---|---|
| Example 1 | 32% | 2.70 | 205.0 | 91.5% |
| Example 15 | 12% | 2.56 | 192.6 | 91.6% |
| Example 16 | 50% | 2.77 | 207.7 | 91.4% |
| Example 17 | 87% | 2.83 | 211.8 | 90.6% |

### Example 18

During preparation of a positive electrode plate, a hollow lithium-rich manganese-based material with a median particle size of 5.1 µm was used as the first positive electrode active substance material and solid lithium iron phosphate with a median particle size of 2.0 µm was used as the second positive electrode active substance material. Except for the above, other operations were the same as those described in Example 1. Then, the secondary battery product of Example 18 was obtained.

### Example 19

During preparation of a positive electrode plate, a hollow lithium-rich manganese-based material with a median particle size of 8.4 µm was used as the first positive electrode active substance material and solid lithium iron phosphate with a median particle size of 0.3 µm was used as the second positive electrode active substance material. Except for the above, other operations were the same as those described in Example 1. Then, the secondary battery product of Example 19 was obtained.

### Example 20

During preparation of a positive electrode plate, a hollow lithium-rich manganese-based material with a median particle size of 14.1 µm was used as the first positive electrode active substance material, and solid lithium iron phosphate with a median particle size of 0.3 µm was used as the second positive electrode active substance material. Except for the above, other operations were the same as those described in Example 1. Then, the secondary battery product of Example 20 was obtained.

Table 3 lists relevant parameters used in Examples 1 and 18 to 20.

**Table 3**

| Example | Median particle size of hollow lithium-rich manganese-based material (µm) | Median particle size of solid lithium iron phosphate (µm) | Median particle size of hollow lithium-rich manganese-based material/median particle size of solid lithium iron phosphate | Compacted density (g/cm³) | Energy density of battery cell (Wh/kg) | Capacity retention rate |
|---|---|---|---|---|---|---|
| Example 1 | 6.0 | 1.0 | 6 | 2.70 | 205.0 | 91.5% |
| Example 18 | 5.1 | 2.0 | 2.6 | 2.65 | 198.7 | 91.3% |
| Example 19 | 8.4 | 0.3 | 28 | 2.72 | 206.1 | 91.0% |
| Example 20 | 14.1 | 0.3 | 47 | 2.82 | 211.6 | 90.6% |

### Example 21

During preparation of a positive electrode plate, a hollow lithium-rich manganese-based material with a specific surface area of 0.56 m²/g was used as the first positive electrode active substance material, and solid lithium iron phosphate with a specific surface area of 10 m²/g was used as the second positive electrode active substance material. Except for the above, other operations were the same as those described in Example 1. Then, the secondary battery product of Example 21 was obtained.

### Example 22

During preparation of a positive electrode plate, a hollow lithium-rich manganese-based material with a specific surface area of 1.42 m²/g was used as the first positive electrode active substance material, and solid lithium iron phosphate with a specific surface area of 10 m²/g was used as the second positive electrode active substance material. Except for the above, other operations were the same as those described in Example 1. Then, the secondary battery product of Example 22 was obtained.

### Example 23

During preparation of a positive electrode plate, a hollow lithium-rich manganese-based material with a specific surface area of 0.88m²/g was used as the first positive electrode active substance material, and solid lithium iron phosphate with a specific surface area of 1m²/g was used as the second positive electrode active substance material. Except for the above, other operations were the same as those described in Example 1. Then, the secondary battery product of Example 23 was obtained.

### Example 24

During preparation of a positive electrode plate, a hollow lithium-rich manganese-based material with a specific surface area of 0.88m²/g was used as the first positive electrode active substance material, and solid lithium iron phosphate with a specific surface area of 18m²/g was used as the second positive electrode active substance material. Except for the above, other operations were the same as those described in Example 1. Then, the secondary battery product of Example 24 was obtained.

Table 4 lists relevant parameters used in Examples 1 and 21 to 24.

**Table 4**

| Example | Specific surface area of hollow particles (m²/g) | Specific surface area of solid particles (m²/g) | Compacted density (g/cm³) | Energy density of battery cell (Wh/kg) | Capacity retention rate |
|---|---|---|---|---|---|
| Example 1 | 0.88 | 10 | 2.70 | 205.0 | 91.5% |
| Example 21 | 0.56 | 10 | 2.65 | 198.6 | 91.3% |
| Example 22 | 1.42 | 10 | 2.73 | 206.1 | 91.0% |
| Example 23 | 0.88 | 1 | 2.68 | 201.2 | 90.8% |
| Example 24 | 0.88 | 18 | 2.72 | 205.6 | 90.9% |

The surface density, compacted density of the positive electrode plate, energy density of the battery cell, capacity retention rate, hollow part volume/hollow particle volume, specific surface area, and median particle size in Tables 1 to 4 were measured as follows.

### (1) Measurement of surface density

After coating and drying of the positive electrode plate, the positive electrode plate was cut by a punching machine into small pieces with a fixed area and the small pieces were weighed. The surface density per unit area can be calculated by subtracting the weight of the substrate (current collector), as expressed by the formula: CW=((m1-m0)/S)*W, where m1 is the weight of one small piece with a single side coated, m0 is the weight of the substrate of the small piece, S is the area of the small piece, and W is the mass percentage of the positive electrode active substance material in the positive electrode active substance layer.

### (2) Measurement of compacted density of positive electrode plate

After cold pressed, the positive electrode plate was cut by a punching machine into small pieces with a fixed area, and then weighing and thickness measurement were performed on the small pieces. The formula for calculating the compacted density was PD=(m1-m0)/(S×T), where m1 is the weight of one small piece, m0 is the weight of the substrate (current collector) of the small piece, S is the area of the small piece, and T is the thickness of the small piece.

### (3) Measurement of energy density of battery cell

Energy density refers to weight energy density, and is calculated using the formula WED=C0×V/M, where C0 is the initial capacity of the battery cell, V is the average voltage of the battery cell, and M is the weight of the battery cell.

### (4) Measurement of capacity retention rate

At 25°C, the battery was charged to a voltage of 4.3 V at a constant current of 1/3C, charged to a current of 0.05C at a constant voltage of 4.3 V, left standing for 5 minutes, and then discharged to a voltage of 2.8 V at 1/3C. The capacity was recorded as the initial capacity C0. The foregoing steps were repeated on the same battery, and the discharge capacity Cn of the battery after the n-th cycle was recorded. The capacity retention rate of the battery was Pn=Cn/C0* 100% after each cycle. The discharge capacity retention rates after the 1000th cycle were tested for examples and comparative examples.

### (5) Measurement of hollow part volume/hollow particle volume

The pore diameter and particle diameter of a hollow particle were determined based on a cross-sectional scanning electron microscopy image. Specifically, images were taken on the cross-sectional morphology of a coated electrode plate sample, an area was randomly selected, and the pore diameters and particle diameters of all hollow particles in the area were measured. The largest pore diameter and particle diameter were adopted. The volumes of the hollow parts and the volumes of the hollow particles were obtained, volume ratios of the hollow parts to the hollow particles were calculated, and then the obtained ratios were averaged.

### (6) Measurement of specific surface area of particle

The measurement was performed with reference to GB/T 19587-2017, Determination of the Specific Surface Area of Solids by Gas Adsorption Using the BET Method. The testing equipment was a TriStar 3020 specific surface and porosity analyzer from Micromeritics in the United States. For the test method, refer to WI-PCA-016 Work Instructions on Specific Surface Area Analysis by Using the Gas Adsorption Method. Key parameters were as follows: degassing time/temperature: 2 hrs/200°C.

### (7) Measurement of median particle size

Particle sizes of the material was measured with reference to GB/T 19077-2016/ISO13320:2009, and a Dᵥ50 value in the result was used as the median particle size. The measurement was performed using a Master Size 2000 laser particle size analyzer from Malvern, with reference to WI-PCA-027 Work Instructions on Laser Particle Size Analysis. Key parameters were as follows: dispersant: 2 drops of 1% CPF dispersant; solvent: 20 mL of DI water; opacity: 8-12%; and sampling manner: full sampling.

As can be learned from the foregoing results, in Examples 1 to 24, the compacted density of the positive electrode plates is increased to be higher than 2.40 g/cm³, the energy density of the battery cells is greatly increased to be higher than 180 Wh/kg, and a high capacity retention rate can be maintained.

However, in Comparative Example 1, only one solid positive electrode active substance material layer is used. The capacity retention rate is high, but the compacted density of the positive electrode plate and the energy density of the battery cell are both low. In Comparative Example 2, only one hollow positive electrode active substance material layer is used. The compacted density of the positive electrode plate is high and the energy density is high, but the cycling performance is unsatisfying. Conditions for Comparative Example 3 are the same as those for Example 1, except that the hollow positive electrode active substance material layer is used as an upper layer and the solid positive electrode active substance material layer is used as a lower layer. However, the compacted density of the positive electrode plate, the energy density, and the cycling performance are all lower.

Therefore, a specific structure, in which the positive electrode active substance layer containing solid particles is used as the upper layer and the positive electrode active substance layer containing hollow particles is used as the lower layer, can increase the compacted density of the positive electrode plate, so as to increase the energy density of the battery cell without affecting the long-term cycling performance of the battery cell.

Furthermore, as can be learned from Examples 1, 10, and 11, when the mass percentage of hollow particles in the first positive electrode active substance material in the first positive electrode active substance layer is set to 70%-100%, it helps increase the compacted density of the positive electrode plate, so as to increase the energy density of the battery cell without affecting the long-term cycling performance of the battery cell.

Furthermore, as can be learned from Examples 1, 12, 13, and 14, when the mass percentage of solid particles in the second positive electrode active substance material in the second positive electrode active substance layer is set to 50%-100%, it helps increase the compacted density of the positive electrode plate, so as to increase the energy density of the battery cell without affecting the long-term cycling performance of the battery cell.

Furthermore, as can be learned from Examples 1, 15, 16, and 17, when the volume ratio of the hollow part in the hollow particle to the hollow particle is set to 10%-90%, it helps increase the compacted density of the positive electrode plate, so as to increase the energy density of the battery cell without affecting the long-term cycling performance of the battery cell.

Furthermore, as can be learned from Examples 1, 18, 19, and 20, when the ratio of the median particle size of the hollow particles to the median particle size of the solid particles is set to 2-50, it helps increase the compacted density of the positive electrode plate, so as to increase the energy density of the battery cell without affecting the long-term cycling performance of the battery cell.

Furthermore, as can be learned from Examples 1, 21, 22, 23, and 24, when the specific surface area of the hollow particles is set to 0.5-1.5 m²/g and the specific surface area of the solid particles is set to 0.5-20 m²/g, it helps increase the compacted density of the positive electrode plate, so as to increase the energy density of the battery cell without affecting the long-term cycling performance of the battery cell.

It should be noted that this application is not limited to the foregoing embodiments. The foregoing embodiments are merely used as examples, and embodiments with a substantially identical technical concept and same functions within the scope of the technical solution in this application all fall into the technical scope of this application. In addition, other manners formed by applying various modifications that can be figured out by a person skilled in the art to the embodiments and by combining some elements of the embodiments without departing from the essence of this application also fall into the scope of this application.

## Claims

1. A positive electrode plate, **characterized by** comprising:
a current collector and a positive electrode membrane formed on at least one surface of the current collector, wherein
the positive electrode membrane comprises a first positive electrode active substance layer and a second positive electrode active substance layer, and
the first positive electrode active substance layer is located between the current collector and the second positive electrode active substance layer, wherein
a first positive electrode active substance material in the first positive electrode active substance layer contains hollow particles, and
a second positive electrode active substance material in the second positive electrode active substance layer contains solid particles.

2. The positive electrode plate according to claim 1, **characterized in that**
in the first positive electrode active substance material in the first positive electrode active substance layer, a mass percentage of the hollow particles is 70%-100%; and/or
in the second positive electrode active substance material in the second positive electrode active substance layer, a mass percentage of the solid particles is 50%-100%.

3. The positive electrode plate according to claim 1 or 2, **characterized in that**
a volume of a hollow part in the hollow particle is 10%-90% of a volume of the hollow particle.

4. The positive electrode plate according to any one of claims 1 to 3, **characterized in that**
a volume of a hollow part in the hollow particle is 10%-50% of a volume of the hollow particle.

5. The positive electrode plate according to any one of claims 1 to 4, **characterized in that**
a ratio of a diameter of a hollow part in the hollow particle to a diameter of the hollow particle is 10%-90%.

6. The positive electrode plate according to any one of claims 1 to 5, **characterized in that**
the hollow particles and the solid particles each comprise at least one of lithium iron phosphate, lithium nickel cobalt manganate, lithium manganate oxide, lithium cobalt oxide, lithium nickel oxide, lithium titanate, lithium nickel cobalt aluminate, and a lithium-rich manganese-based material.

7. The positive electrode plate according to any one of claims 1 to 6, **characterized in that**
the hollow particles are of a lithium-rich manganese-based material or lithium manganate oxide; and/or
the solid particles are of lithium iron phosphate or lithium nickel cobalt manganate.

8. The positive electrode plate according to any one of claims 1 to 7, **characterized in that**
a median particle size of the hollow particles is 0.1 µm-20 µm, and/or
a median particle size of the solid particles is 0.2 µm-2 µm.

9. The positive electrode plate according to any one of claims 1 to 8, **characterized in that**
a ratio of a median particle size of the hollow particles to a median particle size of the solid particles is 2-50.

10. The positive electrode plate according to any one of claims 1 to 9, **characterized in that**
a ratio of a median particle size of the hollow particles to a median particle size of the solid particles is 5-30.

11. The positive electrode plate according to any one of claims 1 to 10, **characterized in that**
a specific surface area of the hollow particles is 0.5-1.5 m²/g, and/or
a specific surface area of the solid particles is 0.5-20 m²/g.

12. The positive electrode plate according to any one of claims 1 to 11, **characterized in that**
a surface density of the first positive electrode active substance material in the first positive electrode active substance layer is 2-30 mg/cm², and/or
a surface density of the second positive electrode active substance material in the second positive electrode active substance layer is 2-30 mg/cm².

13. The positive electrode plate according to any one of claims 1 to 12, **characterized in that**
a surface density of the first positive electrode active substance material in the first positive electrode active substance layer is 2-20 mg/cm², and/or
a surface density of the second positive electrode active substance material in the second positive electrode active substance layer is 2-20 mg/cm².

14. The positive electrode plate according to any one of claims 1 to 13, **characterized in that**
a ratio of a surface density of the second positive electrode active substance material in the second positive electrode active substance layer to a surface density of the first positive electrode active substance material in the first positive electrode active substance layer is 0.1-10.

15. The positive electrode plate according to any one of claims 1 to 14, **characterized in that**
a ratio of a surface density of the second positive electrode active substance material in the second positive electrode active substance layer to a surface density of the first positive electrode active substance material in the first positive electrode active substance layer is 1-4.

16. The positive electrode plate according to any one of claims 1 to 15, **characterized in that** a thickness of the first positive electrode active substance layer is 0.04-0.5 mm; and/or a thickness of the second positive electrode active substance layer is 0.04-0.5 mm.

17. A secondary battery, **characterized by** comprising:
the positive electrode plate according to any one of claims 1 to 16.

18. A battery module, **characterized in that**
the battery module comprises the secondary battery according to claim 17.

19. A battery pack, **characterized in that**:
the battery pack comprises the battery module according to claim 18.

20. An electric apparatus, **characterized in that**
the electric apparatus comprises at least one of the secondary battery according to claim 17, the battery module according to claim 18, and the battery pack according to claim 19.
